# EUROPÄISCHE PATENTSCHRIFT

(11) **EP 1 272 367 B1**
(45) Veröffentlichungstag und Bekanntmachung des Hinweises auf die Patenterteilung: **30.04.2008**
(21) Anmeldenummer: 01917027.3
(22) Anmeldetag: 24.02.2001
(51) Int. Cl.: B60G 17/04, B60C 23/10

(54) **NIVEAUREGELANLAGE MIT EINEM DRUCKLUFTSPEICHER UND EINEM REIFENFÜLLANSCHLUSS**
LEVEL ADJUSTING UNIT WITH A COMPRESSED AIR RESERVOIR AND A TYRE INFLATION CONNECTOR
SYSTEME REGULATEUR DE NIVEAU AVEC RESERVOIR D'AIR COMPRIME ET RACCORD DE GONFLAGE DE PNEUMATIQUE

(30) Priorität: 06.04.2000 DE 10016970
(43) Veröffentlichungstag der Anmeldung: 08.01.2003
(73) Patentinhaber: Continental Aktiengesellschaft, 30165 Hannover (DE)
(72) Erfinder: BEHMENBURG, Christof, 31867 Lauenau (DE)
(86) Internationale Anmeldenummer: PCT/EP2001/002132
(87) Internationale Veröffentlichungsnummer: WO 2001/076898

(56) Entgegenhaltungen:
- EP-A- 0 943 470
- EP-A- 0 978 397
- WO-A-93/19959
- DE-A- 3 542 975
- DE-A- 19 528 852
- US-A- 5 467 595
- PATENT ABSTRACTS OF JAPAN vol. 004, no. 045 (M-006), 9. April 1980 (1980-04-09) & JP 55 015321 A (AISIN SEIKI CO LTD), 2. Februar 1980 (1980-02-02)

## Beschreibung

Die Erfindung betrifft eine Niveauregelanlage für Fahrzeuge mit Luftfedern gemäß dem Oberbegriff des Anspruchs 1. Eine derartige Niveauregelanlage ist beispielsweise aus der DE 35 42 975 A1 bekannt.

Moderne Kraftfahrzeuge verfügen über viele Sicherheitssysteme, von denen jedes im Kraftfahrzeug Bauraum beansprucht, so dass dieser knapp bemessen ist. Aus diesem Grunde ist das Bestreben groß, auch notwendige Bestandteile des Kraftfahrzeuges möglichst kompakt auszubilden. So ist z.B. in jüngster Vergangenheit vorgeschlagen worden, das Reserverad eines Kraftfahrzeuges als Faltrad auszubilden, das grundsätzlich nicht mit Druckluft gefüllt ist, sondern nur im Bedarfsfall aufgefüllt wird. Laut einer gesetzlichen Vorschrift, die es in einigen Ländern gibt, muss im Bedarfsfall der Fülldruck im Faltrad innerhalb einer gewissen Zeitspanne erreicht sein.

Zum Aufpumpen des Faltrades kann grundsätzlich der Kompressor der Niveauregelanlage des Kraftfahrzeuges verwendet werden. Es hat sich jedoch gezeigt, dass die vorgegebene Zeitspanne, innerhalb der das Faltrad aufgepumpt sein muss, nur unter Inkaufnahme einer langen Kompressorlaufzeit und einer hohen Kompressortemperatur eingehalten werden kann. Ist zu Beginn des Aufpumpens die Kompressortemperatur z.B. wegen einer erhöhten Umgebungstemperatur bereits erhöht oder weist das Faltrad ein großes Luftvolumen auf, so wie es beispielsweise bei Geländefahrzeugen der Fall ist, so kann es sogar dazu kommen, dass der Kompressor während des Auffüllvorganges des Faltrades aufgrund Überhitzung zerstört wird.

Reifenfüllanschlüsse in Kombination mit Niveauregelanlagen sind bekannt aus JP-A-55 015321, WO-A-93/19959 und DE-A-19528852.

Der Erfindung liegt die Aufgabe zu Grunde, eine Niveauregelanlage zu schaffen, mit der das Auffüllen eines Reserverades innerhalb einer kurzen Zeitspanne möglich ist, ohne dass sich der Kompressor stark erhitzt oder zerstört wird.

Die Aufgabe wird durch die kennzeichnenden Merkmale des Anspruchs 1 gelöst.

Unter einem steuerbaren Ventil, das das Rückschlagventil überbrückt, ist Folgendes zu verstehen: Das Rückschlagventil liegt in einer Druckluftleitung und das steuerbare Ventil liegt in einer weiteren Druckluftleitung, die vor dem Rückschlagventil von der ersten Druckluftleitung, in der das Rückschlagventil liegt, abzweigt und hinter dem Rückschlagventil wieder auf diese geführt wird. Mit dem steuerbaren Ventil kann in einem Schaltzustand die weitere Druckluftleitung durchgeschaltet (dann ist das Rückschlagventil überbrückt) oder in einem anderen Schaltzustand gesperrt werden.

Ein Vorteil der Erfindung ist darin zu sehen, dass das Reserverad sowohl mit Hilfe des Kompressors als auch mit Hilfe des Druckluftspeichers auffüllbar ist. Liegt die Temperatur des Kompressors vor dem Auffüllvorgang über einem Grenzwert oder überschreitet sie während des Auffüllvorganges den Grenzwert, so wird der Auffüllvorgang allein mit dem Druckluftspeicher durchgeführt bzw. fortgesetzt (die Temperatur des Kompressors wird mit von der Steuereinheit der Niveauregelanlage in an sich bekannter Weise überwacht). Somit kann es durch den Auffüllvorgang des Reserverades nicht zu einer Überhitzung oder Zerstörung des Kompressors kommen und die begrenzte Auffüllzeit auch für große Reserveräder eingehalten werden. Ein weiterer Vorteil der Erfindung ist darin zu sehen, dass während des Auffüllens des Reserverades mit Hilfe des Kompressors die Druckluft nicht über den Lufttrockner der Niveauregelanlage geführt wird. Dieser Vorteil der Erfindung ist zu verstehen, wenn man Folgendes berücksichtigt: Die Luft, die von dem Kompressor in das Reserverad überführt wird, wird der Niveauregelanlage "entnommen", weil das Reserverad nach dem Auffüllvorgang von der Niveauregelanlage entkoppelt und am Kraftfahrzeug verwendet wird. Wird das Reserverad mit Hilfe des Kompressors über den Lufttrockner aufgefüllt, so wird der Lufttrockner dabei feucht und muss regeneriert werden. Da für die Regenerierung die Luft in dem Reserverad nicht mehr zur Verfügung steht, weil sie der Niveauregelanlage "entnommen" wird (und nicht aus dem Reserverad über den Lufttrockner in die Atmosphäre abgelassen wird), muss die Regenerierung dieser Feuchtigkeit mit Hilfe der übrigen Luft in der Niveauregelanlage erfolgen. Es hat sich gezeigt, dass die in der Niveauregelanlage zur Verfügung stehende Luft für eine zufriedenstellende Regenerierung des Lufttrockners nicht ausreichend ist, insbesondere wenn das Reserverad ein großes Luftvolumen aufweist. Ein weiterer Vorteil der Erfindung ist darin zu sehen, dass während eines Auffüllvorganges des Reserverades sowohl der Kompressor als auch der Luftdruckspeicher nicht mit der Atmosphäre in Verbindung steht. Aus diesem Grunde fördern der Kompressor und der Druckluftspeicher ausschließlich in das Reserverad, eine "Verlustförderung" in die Atmosphäre geschieht nicht.

Vorteilhafte Ausführungsbeispiele der Erfindung sind in den Unteransprüchen beansprucht.

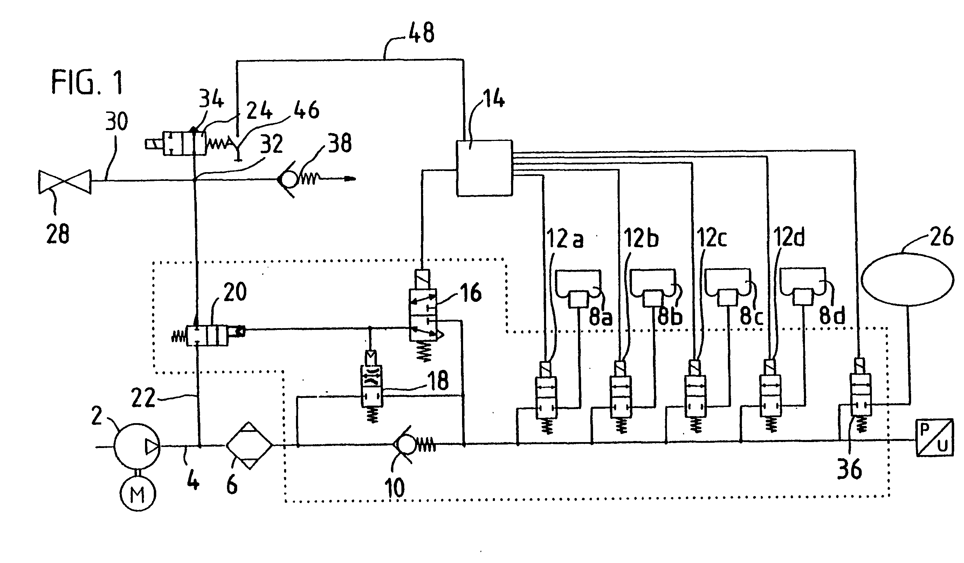

Ein Ausführungsbeispiel und weitere Vorteile der Erfindung werden im Zusammenhang mit den nachstehenden Figuren erläutert, darin zeigen die
- Figuren 1-5: jeweils eine Niveauregelanlage mit einem Druckluftspeicher und einem Reifenfüllanschluss

Figur 1 zeigt eine Niveauregelanlage mit einem Kompressor 2, der über eine Druckluftleitung 4 mit einem Lufttrockner 6 verbunden ist. Jede Luftfeder 8a-8d der Niveauregelanlage ist mit Hilfe des Kompressors 2 über den Lufttrockner 6 und ein Rückschlagventil 10, das zu den Luftfedern 8a-8d hin öffnet, und über ein jeweils einer Luftfeder zugeordnetes elektrisch steuerbares Wegeventil 12a-12d mit Druckluft auffüllbar. Dazu wird das Wegeventil 12a-12d, das der aufzufüllenden Luftfeder 8a-8d zugeordnet ist, von der Steuereinheit 14 der Niveauregelanlage angesteuert und von dem in der Figur 1 gezeigten Grundzustand in den anderen Schaltzustand überführt. Darüber hinaus wird von der Steuereinheit der Kompressor 2 angesteuert, so dass dieser zu laufen beginnt.

Zum Entleeren einer Luftfeder 8a-8d wird das ihr zugeordnete Wegeventil 12-12d wiederum von der Steuereinheit 14 von dem Grundzustand in seinen Schaltzustand überführt. Darüber hinaus wird das elektrisch steuerbare Wegeventil 16 durch die Steuereinheit 14 von dem in der Figur 1 gezeigten Grundzustand in seinen Schaltzustand überführt. Aus der Luftfeder 8a-8d gelangt dann über das Wegeventil 16 Druckluft an die pneumatischen Steuereingänge der pneumatisch steuerbaren Wegeventile 18 und 20, so dass diese von dem in der Figur 1 gezeigten Grundzustand in ihren Schaltzustand übergehen. Die Druckluftleitung 22, die von der Druckluftleitung 4, abzweigt, ist dann über das pneumatisch steuerbare Wegeventil 20 und über das steuerbare Wegeventil 24 (dessen Funktion später erläutert wird) mit der Atmosphäre verbunden. Aus der Luftfeder 8a-8d kann dann über das Wegeventil 12a-12d, das pneumatisch steuerbare Wegeventil 18, das das Rückschlagventil 10 überbrückt, den Luftrtrockner 6, das pneumatisch steuerbare Wegeventil 20 und das steuerbare Wegeventil 24 in die Atmosphäre abgelassen werden.

Über die bisher genannten Bestandteile hinaus verfügt die Niveauregelanlage über einen Druckluftspeicher 26. Dieser ist mit Hilfe des Kompressors über den Lufttrockner 6, das Rückschlagventil 10 und das elektrisch steuerbare Wegeventil 36 mit Druckluft auffüllbar. Dazu wird das elektrisch steuerbare Wegeventil 36 von der Steuereinheit 14 von dem in der Figur 1 gezeigten Grundzustand in den Schaltzustand überführt und der Kompressor 2 angesteuert, so dass dieser zu laufen beginnt.

Darüber hinaus verfügt die Niveauregelanlage über einen Reifenfüllanschluss 28, der in einer Druckluftleitung 30 liegt. Die Druckluftleitung 30 zweigt von der Druckluftleitung 22 (und damit indirekt von der Druckluftleitung 4) in einem Punkt 32 ab, der zwischen dem pneumatisch steuerbaren Wegeventil 20 und dem steuerbaren Wegeventil 24 liegt.

An den Reifenfüllanschluss 28 kann im Bedarfsfall ein (nicht gezeigtes) Reserverad angeschlossen werden, das dann wie folgt aufgefüllt wird. Zunächst wird zum Auffüllen des Reserverades das steuerbare Wegeventil 24 von dem in der Figur 1 gezeigten Grundzustand in seinen Schaltzustand überführt, in dem es den Ausgang 34 der Druckluftleitung 22 zur Atmosphäre hin sperrt. Die Überführung des Wegeventils 24 in seinen Schaltzustand erfolgt durch den Kraftfahrzeugfahrer. Dazu ist das Wegeventil 24 entweder als elektrisch steuerbares Wegeventil ausgebildet und wird beispielsweise über einen Schalter in dem Armaturenbrett des Fahrzeugs angesteuert. Alternativ ist es möglich, das Wegeventil 24 als mechanisch zu betätigendes Wegeventil auszubilden, das mit Hilfe eines Schalthebels etc. in seinen Schaltzustand überführt wird (eine entsprechende Ausbildung ist auch in allen anderen Ausführungsbeispielen möglich).

Durch die Überführung in den Schaltzustand schließt das steuerbare Wegeventil 24 automatisch einen Schalter 46, woraufhin ein Signal über die Signalleitung 48 an die Steuereinheit 14 der Niveauregelanlage gegeben wird. Wenn die Steuereinheit 14 dieses Signal empfängt, steuert sie die elektrisch steuerbaren Wegeventile 16 und 36 an, so dass diese von dem in der Figur 1 gezeigten Grundzustand in ihren Schaltzustand übergehen. Die pneumatischen Steuereingänge der pneumatisch steuerbaren Wegeventile 18 und 20 sind dann über die Wegeventile 36 und 16 mit dem Druckluftspeicher 26 verbunden, so dass diese von dem in der Figur 1 gezeigten Grundzustand in ihren Schaltzustand übergehen. Das Rückschlagventil 10 ist dann durch das Wegeventil 18 überbrückt und die Druckluftleitung 22 ist durchgeschaltet. Somit ist es möglich, dass Druckluft aus dem Druckluftspeicher 26 über das Wegeventil 36, das Wegeventil 18 (d.h., das Wegeventil 18 übernimmt in der Niveauregelanlage gemäß Fig. 1 die Funktion des im Anspruch 1 genannten Reifenauffüllventils und gleichzeitig die Funktion des Entleerungsventils), den Lufttrockner 6, das Wegeventil 20 und über den Reifenfüllanschluss 28 in das Reserverad gelangt.

Gleichzeitig ist über das Wegeventil 20 und den Reifenfüllanschluss 28 ein Auffüllen des Reserverades mit Hilfe des Kompressors 2 möglich; dazu wird dieser von der Steuereinheit 14 angesteuert. Aus dem Druckluftspeicher 26 und mit Hilfe des Kompressors 2 wird ausschließlich Druckluft in das Reserverad gefüllt, da der Ausgang der Druckluftleitung 22 zur Atmosphäre hin durch das Wegeventil 24 gesperrt ist (d.h., dass das steuerbare Wegeventil 24 in der Niveauregelanlage gemäß Fig. 1 die Funktion des im Anspruch 1 genannten Absperrventils übernimmt).

Die Druckluftleitung 30 enthält an ihrem dem Reifenfüllanschluss 28 gegenüberliegenden Ende ein Rückschlagventil 38, das zur Atmosphäre hin öffnet. Die Rückstellkraft dieses Rückschlagventils 38 ist so eingestellt, dass es sich bei einem bestimmten Fülldruck in dem Reserverad öffnet, so dass der Kompressor 2 und der Druckluftspeicher 26 dann in die Atmosphäre fördern. Somit kann eine Beschädigung des Reserverades und der Druckluftleitungen ausgeschlossen werden.

Wenn der Auffüllvorgang des Reserverades abgeschlossen ist, wird das Wegeventil 24 wieder in seinen in der Figur 1 gezeigten Schaltzustand überführt (durch nochmalige Betätigung des Schalters im Armaturenbrett bzw. des mechanischen Hebels). Daraufhin öffnet sich der Schalter 46 und es wird kein Signal mehr an die Steuereinheit 14 gegeben, das ein Auffüllen eines Reserverades anzeigt. Die Steuereinheit 14 bestromt dann die Steuereingänge der Wegeventile 36 und 16 nicht mehr, so dass diese wieder von ihrem Schaltzustand in den in der Figur 1 gezeigten Grundzustand übergehen. Durch den Übergang des Wegeventils 16 in seinen Grundzustand werden die pneumatischen Steuereingänge der pneumatischen Wegeventile 18 und 20 mit der Atmosphäre verbunden, so dass auch diese wieder in ihren Grundzustand übergehen.

Bei dem in der Figur 1 gezeigten Ausführungsbeispiel liegt sowohl an dem Reifenfüllanschluss 28 als auch an dem Rückschlagventil 38 nicht der Luftdruck in der Niveauregelanlage an, wenn sich das Wegeventil 20 in seinem in der Figur 1 gezeigten Grundzustand befindet. Dies hat den Vorteil, dass während des Auffüllens einer Luftfeder 8a - 8d oder des Druckluftspeichers 26 mit Hilfe des Kompressors 2 der von diesem erzeugte Druck nicht an dem Reifenfüllanschluss 28 und dem Rückschlagventil 38 anliegt.

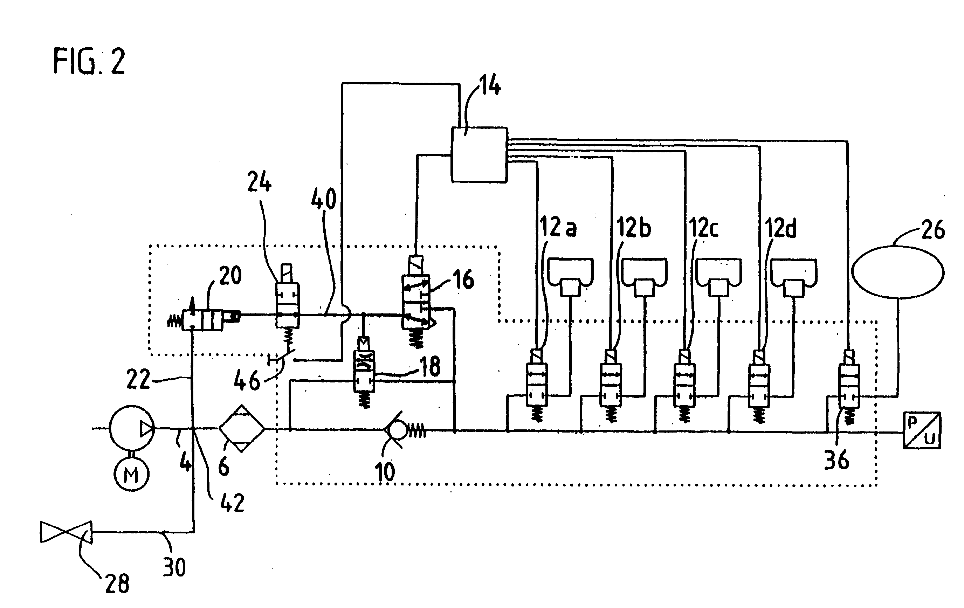

Figur 2 zeigt eine Niveauregelanlage, die weitestgehend genauso aufgebaut ist wie die in der Figur 1 gezeigte Niveauregelanlage. Aus diesem Grunde werden im Folgenden lediglich die Unterschiede der Niveauregelanlage in der Figur 1 erläutert. Bei der Niveauregelanlage gemäß der Figur 2 liegt das steuerbare Wegeventil 24 in der Druckluftleitung 40, die das elektrisch steuerbare Wegeventil 16 mit dem pneumatisch steuerbaren Wegeventil 20 verbindet. Darüber hinaus zweigt von der Druckluftleitung 4 in einem Punkt 42 die Druckluftleitung 30 ab, die den Reifenfüllanschluss 28 und das Rückschlagventil 38 enthält.

An den Reifenfüllanschluss 28 kann ein Reserverad angeschlossen werden, das dann mit Hilfe der Niveauregelanlage wie folgt aufgefüllt werden kann: Zunächst wird das steuerbare Wegeventil 24 von dem in der Figur 1 gezeigten Grundzustand, in dem es die Druckluftleitung 40 durchschaltet, in seinen Schaltzustand überführt, indem es die Druckluftleitung 40 unterbricht. Das in seinem Schaltzustand befindliche Wegeventil 24 schließt den Schalter 46, so dass ein Signal auf die Steuereinheit 14 der Niveauregelanlage geführt wird. Empfängt die Steuereinheit dieses Signal, steuert sie die Wegeventile 36 und 16 an, so dass diese von dem in der Figur 2 gezeigten Grundzustand in ihren Schaltzustand übergehen. Der Druckluftspeicher 26 ist dann über das Wegeventil 36 und das Wegeventil 16 mit dem pneumatischen Steuereingang des pneumatisch steuerbaren Wegeventils 18 verbunden, so dass dieses von dem in der Figur 2 gezeigten Grundzustand in seinen Schaltzustand übergeht, in dem es das Rückschlagventil 10 überbrückt. Der Druckluftspeicher 26 ist dann über das Wegeventil 36, das Wegeventil 18 (d.h., das Wegeventil 18 übernimmt in der Niveauregelanlage gemäß Fig. 2 die Funktion des in Anspruch 1 genannten Reifenauffüllventils und gleichzeitig die Funktion des Entleerungsventils), den Lufttrockner 6 und den Reifenfüllanschluss 28 mit dem Reserverad verbunden. Das Reserverad kann also mit Hilfe des Druckluftspeichers 26 aufgefüllt werden. Gleichzeitig kann das Reserverad mit Hilfe des Kompressors 2 aufgefüllt werden, da dieser über den Reifenfüllanschluss 28 ebenfalls mit dem Reserverad verbunden ist. Da die Druckluftleitung 40 durch das Wegeventil 24 unterbrochen wird, gelangt während des Auffüllens des Reserverades der Luftdruck in dem Druckluftspeicher 26 nicht an den pneumatischen Steuereingang des pneumatisch steuerbaren Wegeventils 20, so dass dieses während des Auffüllvorgangs in seinem in der Figur 2 gezeigten Grundzustand verbleibt und den Ausgang der Druckluftleitung 22 zur Atmosphäre hin sperrt (d.h., das steuerbare Wegeventil 24 übernimmt in der Niveauregelanlage gemäß Fig. 2 die Funktion des in Anspruch 1 genannten Absperrventils). Aus diesem Grunde fördern der Kompressor 2 und der Druckluftspeicher 26 ausschließlich in das Reserverad, eine "Verlustförderung" in die Atmosphäre tritt nicht auf.

Wenn der Auffüllvorgang des Reserverades abgeschlossen ist, wird so vorgegangen, wie es bereits im Zusammenhang mit der Figur 1 erläutert worden ist.

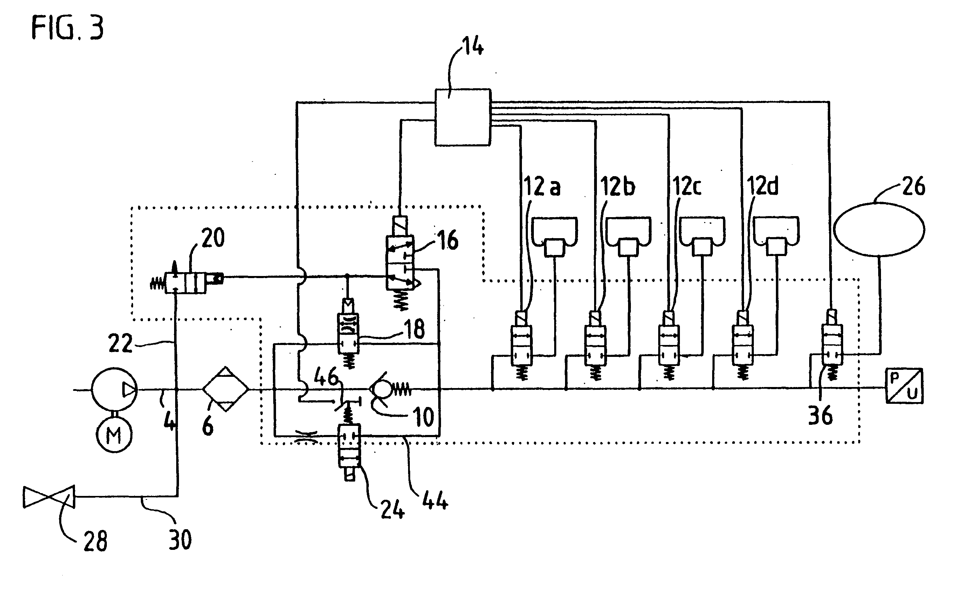

Figur 3 zeigt eine Niveauregelanlage, die weitestgehend genauso aufgebaut ist, wie die in der Figur 2 gezeigte Niveauregelanlage, lediglich das Wegeventil 24 ist woanders angeordnet. Das Wegeventil 24 ist in einer Druckluftleitung 44 angeordnet. In den in der Figur 3 gezeigten Grundzustand sperrt das Wegeventil 24, die Druckluftleitung 44 und im Schaltzustand schaltet sie die Druckluftleitung 44 durch, so dass das Rückschlagventil 10 dann durch diese überbrückt ist. Im Folgenden wird erläutert, wie mit Hilfe der Niveauregelanlage ein an den Reifenfüllanschluss 28 angeschlossenes Reserverad aufgefüllt werden kann. Zunächst wird das Wegeventil 24 von dem in der Figur 3 gezeigten Grundzustand in den Schaltzustand überführt (durch Betätigen des Schalters im Armaturenbrett bzw. durch Betätigen des mechanischen Hebels), so dass die Druckluftleitung 44 durchgeschaltet und das Rückschlagventil 10 überbrückt ist. Durch Überführen des Wegeventils 24 in seinen Schaltzustand wird der Schalter 46 geschlossen, so dass ein Signal an die Steuereinheit 14 der Niveauregelanlage weitergegeben wird. Wenn die Steuereinheit 14 dieses Signal empfängt, steuert sie das Wegeventil 36 an, so dass dieses von dem in der Figur 3 gezeigten Grundzustand in den Schaltzustand übergeht. Der Druckluftspeicher 26 ist dann über das Wegeventil 36, das Wegeventil 24 (d.h., das Wegeventil 24 übernimmt in der Niveauregelanlage gemäß Fig. 3 die Funktion des in Anspruch 1 genannten Reifenauffüllventils; die Funktion des dort genannten Entleerungsventils wird hingegen von dem pneumatisch steuerbaren Wegeventil 18 übernommen), den Lufttrockner 6 und den Reifenfüllanschluss 28 mit dem Reserverad verbunden. Darüber hinaus ist der Kompressor 2 über den Reifenfüllanschluss mit dem Reserverad verbunden, so dass dieses sowohl aus dem Druckluftspeicher 26 als auch mit Hilfe des Kompressors 2 aufgefüllt werden kann. Hierbei findet eine "Verlustförderung" über die Druckluftleitung 22 in die Atmosphäre nicht statt, da während des Auffüllens des Reserverades von der Steuereinheit 14 das Wegeventil 16 nicht angesteuert wird, so dass es in seinem Grundzustand verbleibt. Dementsprechend verbleiben auch die pneumatisch steuerbaren Wegeventile 18 und 20 in ihrem in der Figur 3 gezeigten Grundzustand, so dass das pneumatisch steuerbare Wegeventil 20 die Verbindung der Druckluftleitung 22 zur Atmosphäre hin sperrt (d.h., das pneumatisch steuerbare Wegeventil 20 übernimmt in der Niveauregelanlage gemäß Fig. 3 gleichzeitig die Funktion des in Anspruch 1 genannten ersten Wegeventils und die Funktion des Absperrventils).

Wenn der Auffüllvorgang beendet werden soll, wird das Schaltventil 24 wieder in seinen in der Figur 3 gezeigten Grundzsutand überführt, so dass kein Signal mehr an die Steuereinheit 14 gelangt. Die Steuereinheit 14 bestromt daraufhin den Steuereingang des Wegeventils 36 nicht mehr, so dass dieses wieder in seinen in der Figur 3 gezeigten Grundzustand übergeht.

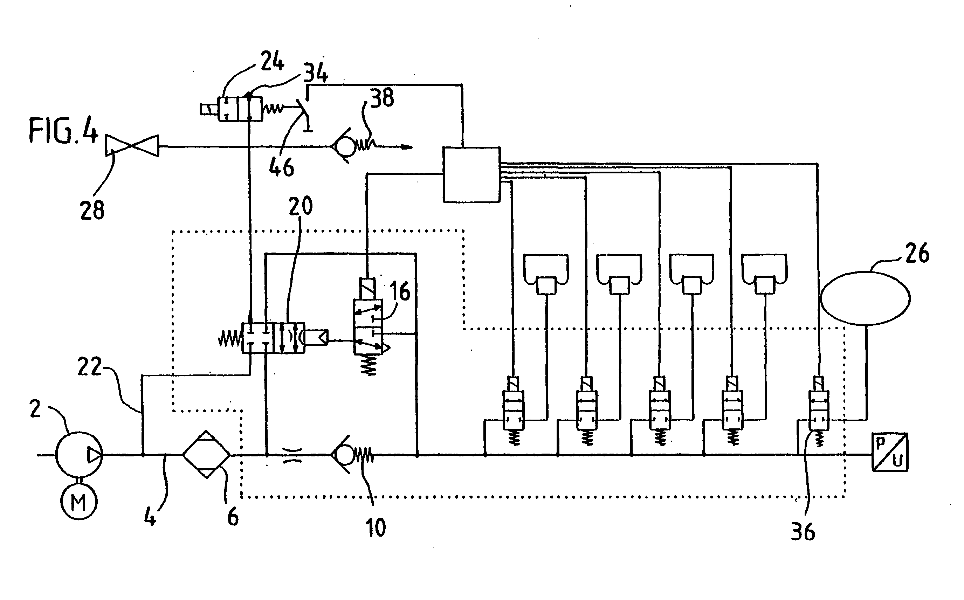

Figur 4 zeigt eine Niveauregelanlage, bei der die pneumatisch steuerbaren Wegeventile 18 und 20 zu einem pneumatisch steuerbaren Wegeventil 20 zusammengefasst sind. Abgesehen von diesem Unterschied ist die in der Figur 4 gezeigte Niveauregelanlage genauso aufgebaut wie die in der Figur 1 gezeigte Niveauregelanlage.

Ein an den Reifenfüllanschluss 28 angeschlossenes Reserverad wird mit Hilfe der Niveauregelanlage wie folgt aufgefüllt: Zunächst wird das steuerbare Wegeventil 24 von dem in der Figur 4 gezeigten Grundzustand in seinen Schaltzustand überführt, wobei es den Schalter 46 schließt. Durch Schließen des Schalters wird ein Signal an die Steuereinheit 14 der Niveauregelanlage gegeben, die daraufhin die Steuereingänge der elektrischen Wegeventile 36 und 16 bestromt, die daraufhin von dem in der Figur 4 gezeigten Grundzustand in ihren Schaltzustand übergehen. Der Druckluftspeicher 26 ist dann über das Wegeventil 36 und das Wegeventil 16 mit dem pneumatischen Steuereingang des pneumatisch steuerbaren Wegeventils 20 verbunden, so dass dieses von dem in der Figur 4 gezeigten Grundzustand in seinen Schaltzustand übergeht. In diesem Schaltzustand überbrückt es das Rückschlagventil 10 und schaltet gleichzeitig die Druckluftleitung 22, die von der Druckluftleitung 4, die den Kompressor 2 mit dem Lufttrockner 6 verbindet, durch. Der Druckluftspeicher 26 ist dann über das Wegeventil 36, das pneumatische Wegeventil 20 (d.h., das pneumatisch steuerbare Wegeventil 20 übernimmt in der Niveauregelanlage gemäß Fig. 4 die Funktion des in Anspruch 1 genannten ersten Wegeventils, die Funktion des Entleerungsventils und die Funktion des Reifenauffüllventils), den Lufttrockner 6 und den Reifenfüllanschluss 28 mit dem Reserverad verbunden. Das Reserverad ist ebenfalls über das pneumatisch steuerbare Wegeventil 20 und den Reifenfüllanschluss 28 mit dem Kompressor 2 verbunden, so das es von diesem und von dem Druckluftspeicher 26 gleichzeitig aufgefüllt werden kann. Während des Auffüllvorganges wird eine "Verlustförderung" in die Atmosphäre unterbunden, da das Wegeventil 24 die Verbindung der Druckluftleitung 22 zur Atmosphäre 34 sperrt (d.h., das Wegeventil 24 übernimmt in der Niveauregelanlage gemäß Fig. 4 die Funktion des in Anspruch 1 genannten Absperrventils).

Zu Beendigung des Auffüllvorganges wird das Absperrventil 24 wieder in den in der Figur 4 gezeigten Grundzustand überführt.

Bei dem in der Figur 4 gezeigten Ausführungsbeispiel liegt sowohl an dem Reifenfüllanschluss 28 als auch an dem Rückschlagventil 38 nicht der Luftdruck in der Niveauregelanlage an, wenn sich das Wegeventil 20 in seinem in der Figur 1 gezeigten Grundzustand befindet. Dies hat den Vorteil, dass während des Auffüllens einer Luftfeder 8a - 8d oder des Druckluftspeichers 26 mit Hilfe des Kompressors 2 der von diesem erzeugte Druck nicht an dem Reifenfüllanschluss 28 und dem Rückschlagventil 38 anliegt.

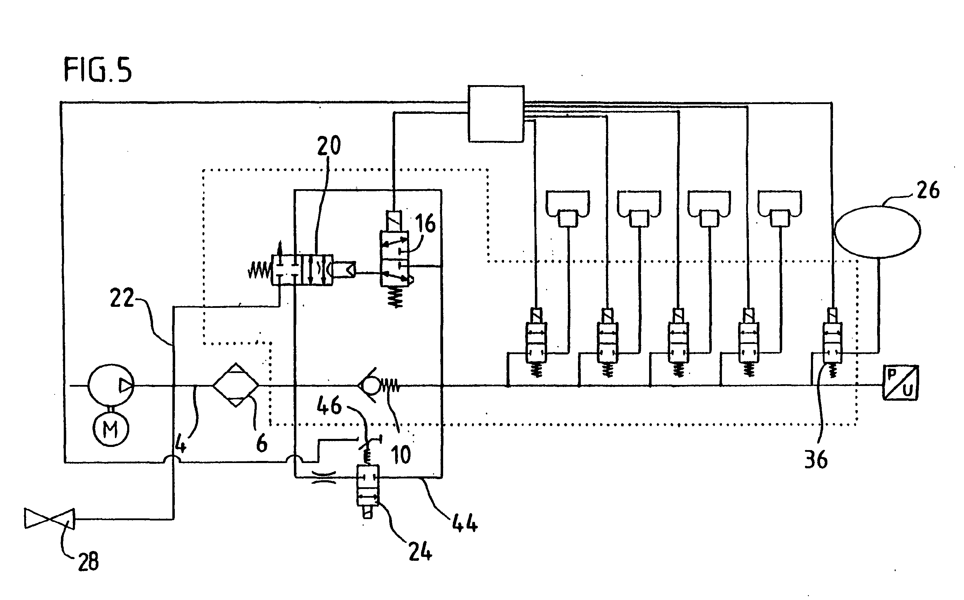

Figur 5 zeigt ein Ausführungsbeispiel, bei dem die pneumatischen Wegeventile 18 und 20, genau wie bei dem Ausführungsbeispiel gemäß der Figur 4, zu einem Ventil zusammengefasst sind. Das Wegeventil 24 und der Reifenfüllanschluss 28 weisen die gleiche Anordnung auf, die bereits im Zusammenhang mit der Figur 3 erläutert worden ist, so dass diesbezüglich auf die dazugehörige Figurenbeschreibung verwiesen wird (bei der Niveauregelanlage gemäß Fig. 5 übernimmt das pneumatisch steuerbare Wegeventil 20 die Funktion des ersten pneumatisch steuerbaren Wegeventils und des Entleerungsventils, und das Wegeventil 24 übernimmt die Funktion des Reifenauffüllventils).

### Bezugszeichenliste

- 2: Kompressor
- 4: Druckluftleitung
- 6: Lufttrockner
- 8a - 8d: Luftfedern
- 10: Rückschlagventil
- 12a - 12d: Wegeventil
- 14: Steuereinheit
- 16: Wegeventil
- 18, 20: pneumatisch steuerbares Wegeventil
- 22: Druckluftleitung
- 24: Wegeventil
- 26: Druckluftspeicher
- 28: Reifenfüllanschluss
- 30: Druckluftleitung
- 32: Punkt
- 34: Ausgang
- 36: Wegeventil
- 38: Rückschlagventil
- 40: Druckluftleitung
- 42: Punkt
- 44: Druckluftleitung
- 46: Schalter
- 48: Signalleitung

## Patentansprüche

1. Niveauregelanlage für Fahrzeuge mit Luftfedern (8a - 8d), durch die ein Fahrzeugaufbau gegenüber mindestens einer Fahrzeugachse abgefedert ist, die folgende Merkmale aufweist:
- einen Kompressor (2) und einen Lufttrockner (6), die über eine erste Druckluftleitung (4) miteinander verbunden sind
- jede Luftfeder (8a - 8d) ist zum Auffüllen über den Lufttrockner (6) und ein zur Luftfeder (8a - 8d) öffnendes Rückschlagventil (10) mit dem Kompressor (2) verbindbar
- von der ersten Druckluftleitung (4) zweigt eine zweite Druckluftleitung (22) ab, in der ein erstes pneumatisch steuerbares Wegeventil (20) liegt, mit dem in einem ersten Schaltzustand die zweite Druckluftleitung (22) mit der Atmosphäre verbindbar und in einem zweiten Schaltzustand die zweite Druckluftleitung (22) zur Atmosphäre sperrbar ist
- jede Luftfeder (8a - 8d) ist zum Entleeren über ein pneumatisch steuerbares Entleerungsventil, mit dem das Rückschlagventil (10) überbrückbar ist, den Lufttrockner (6) und über das erste pneumatisch steuerbare Wegeventil (20) mit der Atmosphäre verbindbar, wobei dann die pneumatischen Steuereingänge des Entleerungsventils und des ersten Wegeventils (20) mit dem Druck in der Luftfeder (8a - 8d) beaufschlagt ist
**dadurch gekennzeichnet, dass** die Niveauregelanlage
- einen Reifenfüllanschluss (28) aufweist, der in einer Druckluftleitung (30) liegt, die von der ersten Druckluftleitung (4) abzweigt, und
- einen Druckluftspeicher (26) aufweist, der derart in der Niveauregelanlage angeordnet ist, dass ein an den Reifenfüllanschluss (28) angeschlossenes Reserverad über ein schaltbares Reifenauffüllventil, mit dem das Rückschlagventil (10) überbrückbar ist, und den Lufttrockner (6) mit Druckluft aus dem Druckluftspeicher (26) auffüllbar ist, wobei die zweite Druckluftleitung (22) dann zur Atmosphäre gesperrt ist, und
- ein Absperrventil aufweist, das einen ersten Schaltzustand einnimmt, wenn eine Luftfeder (8a - 8d) entleert wird und dann eine Öffnung der zweiten Druckluftleitung (22) zur Atmosphäre zulässt, und einen zweiten Schaltzustand einnimmt, wenn der Druckluftspeicher (26) mit dem Reifenfüllanschluss (28) verbunden ist und dann eine Öffnung der zweiten Druckluftleitung (22) zur Atmosphäre unterbindet.

2. Niveauregelanlage für Fahrzeuge mit Luftfedern (8a - 8d) nach Anspruch 1,
**dadurch gekennzeichnet, dass**
- es sich bei dem Entleerungsventil und bei dem Reifenauffüllventil um dasselbe schaltbare Ventil handelt, und dass
- der pneumatische Steuereingang des ersten Wegeventils (20) zum Entleeren einer Luftfeder (8a - 8d) mit dem Druck in dieser und zum Auffüllen eines Reserverades mit dem Druck in dem Druckluftspeicher (26) beaufschlagt wird, so dass das erste Wegeventil (20) während des Entleerens einer Luftfeder (8a - 8d) und während des Auffüllens einen Reserverades den selben Schaltzustand einnimmt, und dass
- das Absperrventil in der zweiten Druckluftleitung (22) liegt und in seinem ersten Schaltzustand die zweite Druckluftleitung (22) mit der Atmosphäre verbindet, und in seinem zweiten Schaltzustand die zweite Druckluftleitung (22) zur Atmosphäre sperrt, und dass
- der Reifenfüllanschluss (28) in einer Druckluftleitung (30) liegt, die von dem Teil der zweiten Druckluftleitung (22) abzweigt, der das erste Wegeventil (20) mit dem Absperrventil verbindet.

3. Niveauregelanlage für Fahrzeuge mit Luftfedern (8a - 8d) nach Anspruch 1,
**dadurch gekennzeichnet, dass**
- es sich bei dem Entleerungsventil und bei dem Reifenauffüllventil um dasselbe schaltbare Ventil handelt, und dass
- der pneumatische Steuereingang des ersten Wegeventils mit dem Druck in einer Luftfeder (8a - 8d) oder dem Druckluftspeicher (26) beaufschlagbar ist, und dass
- das Absperrventil in seinem ersten Schaltzustand die Beaufschlagung des Steuereingangs des ersten Wegeventils (20) mit dem Druck in der Luftfeder (8a - 8d) ermöglicht, und in seinem zweiten Schaltzustand die Beaufschlagung des Steuereingangs des ersten Wegeventils (20) mit dem Druck in dem Druckluftspeicher (26) unterbindet.

4. Niveauregelanlage für Fahrzeuge mit Luftfedern (8a - 8d) nach einem der Ansprüche 2 bis 3, **dadurch gekennzeichnet, dass** durch eine Überführung des Absperrventils in den zweiten Schaltzustand ein Signal an eine Steuereinheit (14) der Niveauregelanlage abgegeben wird und dass die Steuereinheit (14) nach Empfang des Signals eine Verbindung des Druckluftspeichers (26) mit einem an den Reifenfüllanschluss (28) angeschlossenen Reserverad veranlasst.

5. Niveauregelanlage für Fahrzeuge mit Luftfedern (8a - 8d) nach Anspruch 1,
**dadurch gekennzeichnet, dass**
- das Entleerungsventil und das Reifenauffüllventil als separate Ventile ausgebildet sind, und dass
- das erste steuerbare Wegeventil (20) und das Absperrventil als ein einziges Ventil ausgebildet sind.

6. Niveauregelanlage für Fahrzeuge mit Luftfedern (8a - 8d) nach Anspruch 5,
**dadurch gekennzeichnet, dass** durch eine Überführung des Reifenauffüllventils in den Schaltzustand, in dem es das Rückschlagventil (10) überbrückt, ein Signal an eine Steuereinheit (14) der Niveauregelanlage abgegeben wird und dass die Steuereinheit (14) nach Empfang des Signals eine Verbindung des Druckluftspeichers (26) mit einem an den Reifenfüllanschluss (28) angeschlossenen Reserverad veranlasst.

7. Niveauregelanlage für Fahrzeuge mit Luftfedern (8a - 8d) nach einem der Ansprüche 1 bis 6, **dadurch gekennzeichnet, dass** die Druckluftleitung (30), in der der Reifenfüllanschluss (28) liegt, ein Rückschlagventil (38) aufweist, das die zuvor genannte Druckluftleitung (30) mit der Atmosphäre verbindet, wenn der Fülldruck in einem an den Reifenfüllanschluss (28) angeschlossenen Reserverad einen Grenzwert überschreitet.

## Claims

1. Ride level control system for vehicles having air springs (8a-8d) by means of which a vehicle body is suspended with respect to at least one vehicle axle, which ride level control system has the following features:
- a compressor (2) and an air dryer (6) which are connected to one another via a first compressed air line (4),
- each air spring (8a-8d) can be connected to the compressor (2) in order to inflate it via the air dryer (6) and a non-return valve (10) which opens to the air spring (8a-8d),
- a second compressed air line (22) branches off from the first compressed air line (4), a first pneumatically controllable directional control valve (20), with which, in a first switched state, the second compressed air line (22) can be connected to the atmosphere, and in a second switched state the second compressed air line (22) can be disconnected from the atmosphere, being located in said compressed air line (22),
- each air spring (8a-8d) can be connected to the atmosphere for the purpose of emptying via a pneumatically controllable emptying valve, with which the non-return valve (10) can be bypassed, the air dryer (6) and via the first pneumatically controllable directional control valve (20), wherein the pressure in the air spring (8a-8d) can then be applied to the pneumatic control inlets of the emptying valve and of the first directional control valve (20),
**characterized in that** the ride level control system
- has a tyre inflation port (28) which is located in a compressed air line (30) which branches off from the first compressed air line (4), and
- has a compressed air accumulator (26) which is arranged in the ride level control system in such a way that a spare wheel which is connected to the tyre inflation port (28) can be inflated with compressed air from the compressed air accumulator (26) via a switchable tyre inflation valve, with which the non-return valve (10) can be bypassed, and the air dryer (6), wherein the second compressed air line (22) is then disconnected from the atmosphere, and
- has a shut-off valve which assumes a first switched state if an air spring (8a-8d) is emptied and then permits opening of the second compressed air line (22) to the atmosphere, and assumes a second switched state if the compressed air accumulator (26) is connected to the tyre inflation port (28), and then prevents opening of the second compressed air line (22) to the atmosphere.

2. Ride level control system for vehicles having air springs (8a-8d) according to Claim 1, **characterized in that**
- the emptying valve and the tyre inflation valve are the same switchable valve, and **in that**
- in order to empty an air spring (8a-8d) the pressure in said air spring (8a-8d) is applied to the pneumatic control inlet of the first directional control valve (20), and in order to inflate a spare wheel the pressure in the compressed air accumulator (26) is applied to it, so that the first directional control valve (20) assumes the same switched state during the emptying of an air spring (8a-8d) and during the inflation of a spare wheel, and **in that**
- the shut-off valve is located in the second compressed air line (22), and in the first switched state of said shut-off valve it connects the second compressed air line (22) to the atmosphere, and in the second switched state of said shut-off valve it disconnects the second compressed air line (22) from the atmosphere, and **in that**
- the tyre inflation port (28) is located in a compressed air line (30) which branches off from that part of the secon compressed air line (22) which connects the first directional control valve (20) to the shut-off valve.

3. Ride level control system for vehicles having air springs (8a-8d) according to Claim 1, **characterized in that**
- the emptying valve and the tyre inflation valve are the same switchable valve, and **in that**
- the pressure in an air spring (8a-8d) or the compressed air accumulator (26) can be applied to the pneumatic control inlet of the first directional control valve, and **in that**
- the shut-off valve permits, in its first switched state, the pressure in the air spring (8a-8d) to be applied to the control inlet of the first directional control valve (20), and in its second switched state it prevents the pressure in the compressed air accumulator (26) from being applied to the control inlet of the first directional control valve (20).

4. Ride level control system for vehicles having air springs (8a-8d) according to one of Claims 2 to 3, **characterized in that** as a result of the shut-off valve being placed in the second switched state a signal is output to a control unit (14) of the ride level control system, and **in that**, after reception of the signal, the control unit (14) causes the compressed air accumulator (26) to be connected to a spare wheel which is connected to the tyre inflation port (28).

5. Ride level control system for vehicles having air springs (8a-8d) according to Claim 1, **characterized in that**
- the emptying valve and the tyre inflation valve are embodied as separate valves, and **in that**
- the first controllable directional control valve (20) and the shut-off valve are embodied as a single valve.

6. Ride level control system for vehicles having air springs (8a-8d) according to Claim 5, **characterized in that** as a result of the tyre inflation valve being placed in the switched state in which it bypasses the non-return valve (10), a signal is output to a control unit (14) of the ride level control system, and **in that**, after reception of the signal, the control unit (14) causes the compressed air accumulator (26) to be connected to a spare wheel which is connected to the tyre inflation port (28).

7. Ride level control system for vehicles having air springs (8a-8d) according to one of Claims 1 to 6, **characterized in that** the compressed air line (30) in which the tyre inflation port (28) is located has a non-return valve (38) which connects the above-mentioned compressed air line (30) to the atmosphere if the inflation pressure in a spare wheel which is connected to the tyre inflation port (28) exceeds a limiting value.

## Revendications

1. Équipement de régulation de niveau pour véhicules avec amortisseurs pneumatiques (8a - 8d) par le biais desquels une carrosserie de véhicule est suspendue par rapport à au moins un essieu de véhicule, lequel présente les caractéristiques suivantes :
- un compresseur (2) et un dessiccateur d'air (6) qui sont reliés ensemble par le biais d'une première conduite d'air comprimé (4),
- chaque amortisseur pneumatique (8a - 8d) peut être relié, en vue de son remplissage, avec le compresseur (2) par le biais du dessiccateur d'air (6) et d'un clapet anti-retour (10) qui ouvre l'amortisseur pneumatique (8a - 8d),
- de la première conduite d'air comprimé (4) est dérivée une deuxième conduite d'air comprimé (22) dans laquelle se trouve un premier distributeur (20) à commande pneumatique avec lequel, dans un premier état de commutation, la deuxième conduite d'air comprimé (22) peut être reliée avec l'atmosphère et, dans un deuxième état de commutation, la deuxième conduite d'air comprimé (22) peut être isolée de l'atmosphère
- chaque amortisseur pneumatique (8a - 8d), pour être vidé, peut être relié avec l'atmosphère par le biais d'une valve de vidage à commande pneumatique qui permet de court-circuiter le clapet anti-retour (10), du dessiccateur d'air (6) et du premier distributeur (20) à commande pneumatique, les entrées de commande pneumatique de la valve de vidage et du premier distributeur (20) étant alors exposées à la pression présente dans l'amortisseur pneumatique (8a - 8d),
**caractérisé en ce que** l'équipement de régulation du niveau
- présente un raccord de gonflage de pneumatique (28) qui se trouve dans une conduite d'air comprimé (30) qui est dérivée de la première conduite d'air comprimé (4) et
- présente un accumulateur d'air comprimé (26) qui est disposé dans l'équipement de régulation du niveau de telle sorte qu'une roue de secours branchée au raccord de gonflage de pneumatique (28) peut être gonflée avec de l'air comprimé provenant de l'accumulateur d'air comprimé (26) par le biais d'une valve de gonflage de pneumatique, avec laquelle peut être court-circuité le clapet anti-retour (10), et du dessiccateur d'air (6), la deuxième conduite d'air comprimé (22) étant alors isolée de l'atmosphère, et
- présente une valve d'arrêt qui adopte un premier état de commutation lorsqu'un amortisseur pneumatique (8a - 8d) est vidé et autorise alors une ouverture de la deuxième conduite d'air comprimé (22) vers l'atmosphère et adopte un deuxième état de commutation lorsque l'accumulateur d'air comprimé (26) est relié avec le raccord de gonflage de pneumatique (28) et inhibe alors une ouverture de la deuxième conduite d'air comprimé (22) vers l'atmosphère.

2. Équipement de régulation de niveau pour véhicules avec amortisseurs pneumatiques (8a - 8d) selon la revendication 1, **caractérisé en ce que**
- la valve de vidage et la valve de gonflage de pneumatique sont une seule et même valve commutable et que
- l'entrée de commande pneumatique du premier distributeur (20), en vue de vider un amortisseur pneumatique (8a - 8d), est exposée à la pression présente dans celui-ci et, pour gonfler une roue de secours, est exposée à la pression dans l'accumulateur d'air comprimé (26) de sorte que le premier distributeur (20) adopte le même état de commutation pendant le vidage de l'amortisseur pneumatique (8a - 8d) et pendant le gonflage d'une roue de secours, et que
- la valve d'arrêt se trouve dans la deuxième conduite d'air comprimé (22) et, dans son premier état de commutation, elle relie la deuxième conduite d'air comprimé (22) avec l'atmosphère et, dans son deuxième état de commutation, isole la deuxième conduite d'air comprimé (22) de l'atmosphère, et que
- le raccord de gonflage de pneumatique (28) se trouve dans une conduite d'air comprimé (30) qui est dérivée de la partie de la deuxième conduite d'air comprimé (22) qui relie la valve d'arrêt avec le premier distributeur (20).

3. Équipement de régulation de niveau pour véhicules avec amortisseurs pneumatiques (8a - 8d) selon la revendication 1, **caractérisé en ce que**
- la valve de vidage et la valve de gonflage de pneumatique sont une seule et même valve commutable et que
- l'entrée de commande pneumatique du premier distributeur (20) peut être exposée à la pression dans un amortisseur pneumatique (8a - 8d) ou dans l'accumulateur d'air comprimé (26), et que
- la valve d'arrêt, dans son premier état de commutation, permet d'exposer l'entrée de commande du premier distributeur (20) à la pression dans l'amortisseur pneumatique (8a - 8d) et, dans son deuxième état de commutation, empêche que l'entrée de commande du premier distributeur (20) soit exposée à la pression dans l'accumulateur d'air comprimé (26).

4. Équipement de régulation de niveau pour véhicules avec amortisseurs pneumatiques (8a - 8d) selon l'une des revendications 2 à 3, **caractérisé en ce que** le fait d'amener la valve d'arrêt dans le deuxième état de commutation provoque l'émission d'un signal à une unité de commande (14) de l'équipement de régulation de niveau et que l'unité de commande (14), après avoir reçu le signal, commande une liaison de l'accumulateur d'air comprimé (26) avec une roue de secours reliée au raccord de gonflage de pneumatique (28).

5. Équipement de régulation de niveau pour véhicules avec amortisseurs pneumatiques (8a - 8d) selon la revendication 1, **caractérisé en ce que**
- la valve de vidage et la valve de gonflage de pneumatique sont réalisées sous la forme de valves séparées, et que
- le premier distributeur (20) commandable et la valve d'arrêt sont réalisés sous la forme d'une valve unique.

6. Équipement de régulation de niveau pour véhicules avec amortisseurs pneumatiques (8a - 8d) selon la revendication 5, **caractérisé en ce que** le fait d'amener la valve de gonflage de pneumatique dans l'état de commutation dans lequel elle court-circuite le clapet anti-retour (10) provoque l'émission d'un signal à une unité de commande (14) de l'équipement de régulation de niveau et que l'unité de commande (14), après avoir reçu le signal, commande une liaison de l'accumulateur d'air comprimé (26) avec une roue de secours reliée au raccord de gonflage de pneumatique (28).

7. Équipement de régulation de niveau pour véhicules avec amortisseurs pneumatiques (8a - 8d) selon l'une des revendications 1 à 6, **caractérisé en ce que** la conduite d'air comprimé (30) dans laquelle se trouve le raccord de gonflage de pneumatique (28) présente un clapet anti-retour (38) qui relie la conduite d'air comprimé (30) mentionnée précédemment avec l'atmosphère lorsque la pression de gonflage dans une roue de secours branchée au raccord de gonflage de pneumatique (28) dépasse une valeur limite.
